# EUROPÄISCHE PATENTSCHRIFT

(11) **EP 2 432 632 B1**
(45) Veröffentlichungstag und Bekanntmachung des Hinweises auf die Patenterteilung: **24.10.2012**
(21) Anmeldenummer: 10721617.8
(22) Anmeldetag: 06.05.2010
(51) Int. Cl.: B29C 45/14, A44C 17/04, A44C 17/02, A44C 27/00

(54) **VERFAHREN ZUR HERSTELLUNG EINES SPRITZGEGOSSENEN DEKORATIONSARTIKELS UND SPRITZGIESSARTIKEL**
PROCESS FOR PRODUCING AN INJECTION-MOULDED DECORATIVE ITEM AND INJECTION-MOULDED ITEM
PROCÉDÉ DE FABRICATION D'UN ARTICLE DE DÉCORATION MOULÉ PAR INJECTION ET ARTICLE MOULÉ PAR INJECTION

(30) Priorität: 19.05.2009 AT 7792009
(43) Veröffentlichungstag der Anmeldung: 28.03.2012
(73) Patentinhaber: D. Swarovski KG, 6112 Wattens (AT)
(72) Erfinder: ÖFNER, Gerhard, A-6112 Wattens (AT)
(74) Vertreter: Gangl, Markus
(86) Internationale Anmeldenummer: PCT/AT2010/000148
(87) Internationale Veröffentlichungsnummer: WO 2010/132906

(56) Entgegenhaltungen:
- EP-A2- 2 147 610
- WO-A1-00/27237
- WO-A1-2010/006500
- DE-A1- 2 452 250
- JP-A- 6 047 774
- JP-A- 2004 113 617
- JP-A- 2010 005 967

## Beschreibung

Die Erfindung betrifft Verfahren zur Herstellung eines mit mindestens einem Schmuckstein versehenen Artikels, wobei der mindestens eine Schmuckstein in oder an einer Haltevorrichtung angeordnet wird und unter Verwendung einer Spritzgießmaschine mit Kunststoffschmelze hinterspritzt wird.

Kunststoffe sind aufgrund ihrer Materialeigenschaften in verschiedensten und vielfältigsten Bereichen des täglichen Lebens einsetzbar. Insbesondere Gehäuse, beispielsweise zur Aufnahme technischer Geräte, können in beliebiger Form durch Spritzgießen hergestellt werden, wobei hier Kunststoffschmelze in eine Kavität eines Spritzgießwerkzeugs beispielsweise mit einer Plastifizierschnecke gepresst wird, um anschließend zu erstarren und den Spritzgießartikel auszubilden. Die äußere Form des Spritzgießartikels ist dabei durch die Form der Kavität bzw. deren Innenwandung gegeben.

Als nachteilig hat sich dabei herausgestellt, dass eine Dekoration derartiger Spritzgießartikel im Verlauf des Spritzgießprozesses nur sehr schwer möglich ist, insbesondere da eine Manipulation des Kunststoffformteils und etwaiger Dekorationselemente in der Kavität im Spritzgießwerkzeug kaum möglich ist. Als teilweiser Ausweg hat sich dabei die sogenannte In-Mold-Technik oder IMD-Technik herausgestellt, bei der eine Trägerfolie, die ein gewisses Dekor aufweist, in die Kavität des Spritzgießwerkzeugs eingeschlossen und mit Kunststoffschmelze hinterspritzt wird. Nach der Erstarrung ergibt sich daraus ein dekorierter Spritzgießartikel.

Die DE 102 56 827 A1 zeigt einen Verbundkörper bestehend aus einem Dekor sowie einer Funktionsschicht, wobei eine mit dem Dekor versehene Trägerfolie auf ein Kunststoffformteil appliziert wird, indem die Trägerfolie mit Kunststoff hinterspritzt wird. Das Dekor selbst ist dabei im Wesentlichen zweidimensional und als Anzeigeelement, als graphisches Element oder als Hologramm ausgebildet.

Die DE 10 2004 041 867 A1 zeigt ebenfalls einen dekorierten Spritzgießartikel der mit einer Transferfolie in einem In-Mold-Verfahren hergestellt wird. Das Dekorelement weist dabei eine oder mehrer Schichtlagen auf.

Die AT 6 984 U1 sowie die DE 19 43 665 U zeigen einen Schmuckkörper mit Schmucksteinen, wobei die Fassungen der Schmucksteine spritzgegossen sind. Zwischen den einzelnen Fassungen sind stabförmige Verbindungselemente angeordnet. Die Schmucksteine werden in Negative einer Gussform eingelegt, wobei flüssige Kunststoffschmelze durch eine Einguss- bzw. Einspritzöffnung in die Negative gefüllt wird. Zur Verwendung in einem heutzutage modernen Spritzgießprozess, bei dem in eine Kavität einer Spritzgießform mit hohem Druck Kunststoffschmelze eingedrückt wird, sind diese Verfahren gänzlich ungeeignet.

Die WO 02/066263 A2 zeigt ein Verfahren zur Markierung von Edelsteinen, wobei die Edelsteine zwischenzeitlich in einen Haltekörper eingegossen werden. Die Vorrichtung, mittels der diese Haltevorrichtung spritzgegossen wird, ist ebenso nicht geeignet, um in einer Kavität einer modernen Spritzgießmaschine verwendet zu werden. Zudem ist die Manipulation der Edelsteine für den Gießprozess umständlich und kompliziert.

Die DE 10 2004 041 868 B3 und die DE 10 2005 006 074 A1 beschreiben eine Transferfolie sowie deren Verwendung in einem In-Mold-Verfahren zur Herstellung von dekorierten Kunststoffartikeln. Die Transferfolie weist dabei eine Strukturschicht insbesondere in Form einer Replizierlackschicht auf, die als Dekor dient und partiell, beispielsweise in Form eines Musters, auf der Transferfolie angeordnet ist und eine Schichtdicke von mindestens 9 µm aufweist. Die Strukturschicht selbst ist aus einem Strukturierungslack mit einem hohen Festkörpergehalt gebildet.

Die gattungsbildende WO 00/027237 zeigt ein Verfahren zur Herstellung eines Schmuckgegenstands, bei dem in zwei aufeinander folgenden Verfahrensschritten Schmucksteine auf beiden Seiten eines flachen Trägerkörpers aus Kunststoff angeordnet werden. Der nach dem ersten Verfahrensschritt hergestellte halbfertige Trägerkörper wird als Haltevorrichtung für den zweiten Verfahrensschritt verwendet.

Die Nachteile dieser Erfindungen liegen insbesondere in der limitierten Auswahl an möglichen Dekorationselementen mit denen der Spritzgießartikel während des Spritzgießens verziert werden kann. Diese Auswahl beschränkt sich auf mehr oder weniger zweidimensionale oder aus zweidimensionalen Schichten gebildete Dekorelemente, die gegebenenfalls gefärbt sein können.

Besondere Ästhetik versprechen seit jeher Gegenstände, die mit echten oder auch künstlichen Schmucksteinen verziert sind. Um einen herkömmlichen Spritzgießartikel mit derartigen Schmucksteinen zu versehen, ist es bisher in mühevoller Arbeit nötig, die Schmucksteine einzeln auf die Oberfläche des Sprüzgießartikels zu kleben. Neben der mühevollen Arbeit ergibt sich dabei der Nachteil, dass die dadurch geschaffene

Verbindung zwischen Spritzgießartikel und Schmuckstein nur mangelhaft und damit leicht lösbar ist.

Aufgabe der Erfindung ist es daher ein Verfahren zur Verfügung zu stellen, mit dem ein mit mindestens einem Schmuckstein versehener Spritzgießartikel einfach herstellbar ist, wobei sich dieser durch eine besonders stabile Fixierung des Schmucksteins auszeichnet, und wobei insbesondere die Anordnung des Schmucksteins auf dem Spritzgießartikel in einfacher Weise ermöglicht werden soll.

Dies wird durch ein Verfahren mit den Merkmalen des Anspruchs 1 gelöst.

Indem mindestens ein Schmuckstein in oder an einer Haltevorrichtung angeordnet wird und dann in diesem Zustand unter Verwendung einer Spritzgießmaschine mit Kunststoffschmelze hinterspritzt wird, bleibt eine einmal gewählte Positionierung des Schmucksteins auch während des Spritzgießvorgangs erhalten. Wird die Haltevorrichtung mit dem daran oder darin angeordneten Schmuckstein in eine Kavität eines Spritzgießwerkzeugs eingelegt, bleibt die Anordnung des Schmucksteins auch in der Kavität erhalten, sodass eine Manipulation oder auch eine nachträgliche Befestigung des Schmucksteins nicht nötig ist. Die Haltevorrichtung muss natürlich die nötigen Materialeigenschaften aufweisen um den herrschenden Drücken und Temperaturen während eines Spritzgießprozesses standzuhalten. Die verwendeten Spritzgießmaschinen selbst sind an sich im Stand der Technik bekannt und werden bereits für vielfältige Spritzgießverfahren eingesetzt.

Nach der Anordnung des mindestens einen Schmucksteins an oder in der Haltevorrichtung wird dieser mit Kunststoffschmelze unter Verwendung einer Spritzgießmaschine, beispielsweise mittels einer Plastifizierschnecke mit Kunststoffschmelze hinterspritzt, wobei hohe Drücke und/oder Temperaturen auftreten können. Dazu kann die Haltevorrichtung mit angeordnetem Schmuckstein in die Kavität eines Spritzgießwerkzeugs eingesetzt bzw. eingelegt werden.

Indem nun die Kunststoffschmelze erstarrt bildet sich die äußere geometrische Form eines erfindungsgemäßen Spritzgießartikels aus. Dort wo der mindestens eine Schmuckstein angeordnet ist, umfließt die Kunststoffschmelze den Schmuckstein zumindest teilweise und verbindet sich durch den Erstarrungsprozess mit diesem, wobei diese Verbindung äußerst fest und stabil ist. Zudem ist die Anordnung des Schmucksteins in einem derartigen, dekorativen Spritzgießartikel einfach realisierbar, weil kein weiterer Prozess nötig ist, wobei der Schmuckstein z.B. auf die Oberfläche eines Spritzgießartikels geklebt werden muss. Die Haltevorrichtung selbst kann an der Oberfläche der erstarrten Kunststoffschmelze angeordnet sein und dort auch verbleiben, insbesondere falls die Haltevorrichtung selbst optisch ansprechend ausgebildet ist, oder nach dem Spritzgießprozess entfernt werden. Es kann auch vorgesehen sein, die Haltevorrichtung derart auszubilden, dass diese während des Spritzgießens von der Schmelze umflossen wird, sodass die Haltevorrichtung dann innerhalb des Spritzgießartikels angeordnet ist.

Weitere vorteilhafte Ausführungsformen der Erfindung sind in den abhängigen Ansprüchen angeführt.

In einer besonders bevorzugten Ausführungsform des erfindungsgemäßen Verfahrens wird eine Velzahl von Schmucksteinen in oder an einer Haltevorrichtung angeordnet und unter Verwendung einer Spritzgießmaschine mit Kunststoffschmelze hinterspritzt. Dadurch wird die Zeitersparnis gegenüber Verfahren, bei denen eine Vielzahl von Schmucksteinen nach dem Spritzgießprozess manuell auf den Spritzgießartikel geklebt wird, besonders groß. Die Vielzahl von Schmucksteinen kann in oder an der Haltevorrichtung in einem Muster angeordnet sein. Durch den Spritzgießprozess sind dann die Schmucksteine in diesem Muster auf bzw. in dem Spritzgießartikel angeordnet, wobei die Verbindung der Schmucksteine mit dem Spritzgießartikel besonders stabil ist. Erst durch die Lehre der Erfindung wird es ermöglicht, die Vielzahl von Schmucksteinen - gegebenenfalls in einem bestimmten Muster - in der Kavität der Spritzgießmaschine zu positionieren und diese Positionierung auch während des Spritzgießprozesses aufrecht zu erhalten.

Indem die Haltevorrichtung eine Trägerfolie aufweist, die dann in eine Kavität eines Spritzgießwerkzeugs eingesetzt wird, und dann mit Kunststoffschmelze hinterspritzt wird, bildet sich wiederum durch das Erstarren der Kunststoffschmelze eine äußerst stabile Verbindung zwischen dem oder den Schmuckstein(en) und dem Spritzgießartikel aus. Eine derartige Trägerfolie realisiert in besonders einfacher Weise die erforderlichen Haltevoraussetzungen für den oder die Schmuckstein(e) während des Spritzgießprozesses. Die Trägerfolie liegt während des Spritzgießens an der Innenwand der Kavität an und wird durch die Kunststoffschmelze, welche mit hohem Druck eingepresst wird, gegen diese Innenwandung gedrückt. Die Trägerfolie dient somit als Transferfolie, da der oder die Schmuckstein(e) zunächst auf der Trägerfolie angeordnet wird oder werden, um dann mittels des Spritzgießprozesses auf bzw. in den Spritzgießartikel transferiert zu werden. Die Trägerfolie kann weiters als Grenzfläche des Spritzgießartikels dienen, insbesondere falls der oder die Schmuckstein(e) alle auf derselben Seite der Trägerfolie angeordnet wird oder werden, was auch bevorzugt vorgesehen ist.

Die Trägerfolie muss jedenfalls eine IMD-fähige Folie sein, d.h. sie muss den hohen Belastungen während des Spritzgießens in Folge der hohen Temperaturen und hohen Drücke standhalten können.

In einer Ausführungsform umfasst das erfindungsgemäße Verfahren weiters, dass die Haltevorrichtung vom Spritzgießartikel entfernt wird, also beispielsweise die Trägerfolie wieder abgezogen wird. Bevorzugt erfolgt dieses Entfernen nach dem Erstarren der Kunststoffschmelze, weil natürlich gewährleistet sein muss, dass der oder die Schmuckstein(e) im Spritzgießartikel verbleiben.

Eine besonders einfache Lagefixierung des mindestens einen Schmucksteines auf einer Trägerfolie ist ermöglicht, indem dieser auf seiner vorgesehenen Position auf die Trägerfolie geklebt wird. Bei diesem Klebstoff kann es sich beispielsweise um einen Klebstoff handeln, der mittels UV-Strahlung aushärtbar ist. Es können aber auch andere Klebstoffe verwendet werden. Aufgrund der oben angeführten hohen Belastungen während des Spritzgießprozesses sollte diese Verbindung zwischen dem Schmuckstein und der Trägerfolie möglichst stabil sein. Falls die Trägerfolie auf dem Endprodukt verbleibt, kann vorgesehen sein, einen Klebstoff zu verwenden, der zumindest teilweise für Licht des sichtbaren Spektralbereichs transparent ist.

In einer weiteren Ausführungsform werden im erfindungsgemäßen Verfahren Schmucksteine verwendet, die eine Sichtfläche und eine Setzfläche aufweisen. Die Sichtfläche soll dabei beim Endprodukt, also beim mit mindestens einen Schmuckstein versehenen Spritzgießartikel für einen Betrachter erkennbar sein, sodass vorgesehen ist, die Sichtfläche so anzuordnen, dass diese an der Außenseite der Kunststoffschmelze angeordnet ist. Die Sichtfläche kann sich dabei dadurch auszeichnen, dass sie speziell bearbeitet ist, um gewissen optischen Bedürfnissen zu genügen. Wird eine Trägerfolie verwendet, kann der oder die Schmuckstein(e) mit der Sichtfläche auf der Trägerfolie, d.h. an einer Seite der Trägerfolie, angeordnet sein, beispielsweise indem die Sichtfläche(n) auf die Trägerfolie geklebt wird oder werden.

Insbesondere, falls die Sichtfläche nicht nur eine ebene Begrenzungsfläche sondern eine Oberfläche eines dreidimensionalen Bereichs eines Schmucksteins ist, kann der mindestens eine Schmuckstein auch zumindest teilweise in die Trägerfolie gedrückt werden, sodass sich eine formschlüssige Verbindung ausbildet. Dabei kann vorgesehen sein, die Trägerfolie zur Anordnung des Schmucksteines tiefzuziehen, wobei bevorzugt vorgesehen ist, die Sichtfläche des zumindest einen Schmucksteines in tiefgezogenen Bereichen anzuordnen. Dieser Tiefziehvorgang kann dabei erleichtert werden, wenn die Trägerfolie erhitzt und/oder einer Umgebung mit Unterdruck ausgesetzt wird.

Um dem mit dem mindestens einen Schmuckstein versehenen Spritzgießartikel weitere gewünschte optische Eigenschaften zu verleihen, kann vorgesehen sein, diesen zu lackieren, wobei eine derartige Lackschicht auch als Schutzschicht dient. Auch eine gesonderte Schutzschicht ist möglich. Zusätzlich oder alternativ kann der Spritzgussartikel geschliffen und/oder poliert werden.

Besonders bevorzugt ist dabei, dass die Trägerfolie Polycarbonate (PC) und/oder Polymethylmethaacrylate (PMMA) und/oder Polyethylenterephthalat (PET) umfasst.

Um den Belastungen während des Spritzgießens standzuhalten, ist in einer Ausführungsform vorgesehen, dass die Trägerfolie in einem Druckbereich zwischen 300 bar und 1500 bar, vorzugsweise zwischen 500 bar und 1200 bar, druckstabil und zusätzlich oder alternativ in einem Temperaturbereich zwischen 80 °C und 350 ° C, vorzugsweise zwischen 100 °C und 300 °C, temperaturstabil ist. Dabei bedeutet diese Druck- bzw. Temperaturstabilität, dass die Trägerfolie während des Spritzgießprozesses durch die in der Kavität herrschenden Bedingungen nicht zerstört wird. Obwohl z.B. eine Polycarbonatfolie im Falle einer länger andauernden Temperatureinwirkung nur bis ca. 200 °C hitzebeständig ist, ist sie für das erfindungsgemäße Verfahren auch für höhere Temperaturen hitzebeständig, da ein derartiger Einspritzprozess nur ca. 2 Sekunden dauert und nur während dieser Zeit die hohen Temperaturen bzw. hohen Drücke herrschen. Dadurch ist gewährleistet, dass auch in diesen Temperatur- und Druckbereichen eine stabile Anordnung und Positionierung der Schmucksteine in der Trägerfolie gegeben ist.

Da es vorgesehen sein kann, dass sich die Trägerfolie mit der erstarrten Kunststoffschmelze verbindet und damit als Bestandteil des dekorativen Spritzgießartikels auf diesem verbleibt, kann vorgesehen sein, die Trägerferfolie zumindest teilweise für Licht des sichtbaren Spektralbereichs transparent auszuführen, damit der mindestens eine hinterspritzte Schmuckstein des dekorierten Spritzgießartikels erkennbar bleibt. Um gewisse optische Effekte zu erzielen, kann aber vorgesehen sein, die Trägerfolie leicht farbig auszubilden.

In einer besonders bevorzugten Ausführungsform ist der mindestens eine Schmuckstein, vorzugsweise facettiert, geschliffen. Beispiele derartiger Schmucksteine sind die im Handel unter der Bezeichnung "Rosen" geläufigen Schmucksteine. Die Schmucksteine können sowohl eine flache Sichtfläche (flattops) als auch eine flache Setzfläche (flatbacks) aufweisen. Schmucksteine mit sowohl flacher Sicht- als auch flacher Setzfläche haben einen im Wesentlichen trapezförmigen Querschnitt. Es können aber auch Schmucksteine mit zu einer Spitze zusammenlaufenden Sicht - und/oder Setzfläche verwendet werden, wie zum Beispiel die im Handel unter der Bezeichnung "Chaton" geläufigen Schmucksteine.

Aufgrund der sehr teuren Spritzgießwerkzeuge sind Spritzgießartikel nur als Massenprodukt sinnvoll herstellbar. Damit ist naturgemäße eine große Anzahl an Schmucksteinen verbunden. Obgleich natürlich auch echte Edelsteine oder (synthetische) Halbedelsteine verwendbar sind, ist es besonders bevorzugt Glassteine oder Schmucksteine aus Kunststoff zu verwenden, da diese in ihrer Herstellung kostengünstig sind aber dennoch die nötige Brillianz und optische Qualität aufweisen. Besonders bevorzugt sind Glassteine mit flacher Sichtfläche (flat tops).

In einer weiteren Ausführungsform der Erfindung weist der mindestens eine Schmuckstein eine Setzfläche auf, die mit einer Verspiegelung versehen ist. Im fertigen Endprodukt, also im mit dem Schmuckstein versehenen Spritzgießartikel, weist diese Setzfläche ins Innere des Spritzgießartikels. Eine derartige, beispielsweise als Reflexionsschicht ausgebildete Verspiegelung erhöht zum einen die Brillianz, da an der Spiegelung Licht reflektiert wird. Zum anderen wird durch eine derartige Verspiegelungsschicht verhindert, dass die direkten Kontaktflächen des Schmucksteins mit dem ausgehärteten Kunststoff sichtbar sind. Es kann während des Spritzgießprozesses nämlich vorkommen, dass die Verbindungsfläche zwischen Kunststoff und Schmuckstein nicht überall glatt sondern teilweise porös oder körnig ausgebildet ist. Derartige, als unschön empfundene Bereiche können durch eine derartige Verspiegelungsschicht ausgeblendet werden.

In einer besonders bevorzugten Ausführungsform der Erfindung ist eine Vielzahl von Schmucksteinen in oder an der Trägerfolie angeordnet, wobei die Schmucksteine in Form von Reihen und Spalten oder einem gewünschten Muster auf der Trägerfolie angeordnet sind, wodurch der fertige Spritzgießartikel ebenso dieses Muster aufweist.

In einer Ausführungsform ist dabei vorgesehen, dass der mindestens eine Schmuckstein reliefartig von der Oberfläche des Spritzgießartikels hervorsteht. Zu diesem Zweck kann vorgesehen sein, Schmucksteine zu verwenden, die über eine zu einer Spitze zusammenlaufende Sichtfläche verfügen. Wichtig ist jedoch, dass der oder die Schmuckstein(e) so weit im spritzgegossenen Kunststoffteil angeordnet sind, dass eine feste Verbindung möglichst zwangsläufig gegeben ist. Weist der Schmuckstein beispielsweise eine Rondiste auf, die die Sichtläche von der Setzfläche trennt, kann vorgesehen sein, den Schmuckstein bis über die Rondiste im spritzgegossenen Kunststoffteil anzuordnen.

In einer weiteren Ausführungsform der Erfindung ist vorgesehen, die Oberfläche in der der oder die Schmuckstein(e) mittels des oben dargelegten Verfahrens angeordnet ist oder sind, also jene Oberfläche die durch ein Hinterspritzen einer Trägerfolie oder einer Haltevorrichtung mit angeordnetem oder angeordneten Schmuckstein(en) entstanden ist, im Wesentlichen plan auszubilden. Dies ist besonders geeignet für Schmucksteine mit ebenen Sichtflächen, also so genannten flattops.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1a und 1b: eine Seitenansicht sowie eine Draufsicht einer Trägerfolie mit darauf angeordneten Schmucksteinen,
- Fig. 2a und 2b: eine Seitenansicht sowie eine Draufsicht einer Trägerfolie mit einer weiteren Ausführungsform darauf angeordneter Schmucksteine,
- Fig. 3a bis 3c: Querschnitte durch verschiedene Ausführungsformen von erfindungsgemäßen Spritzgießartikeln und
- Fig.4: ein Flussdiagramm verschiedener Verfahrensschritte des erfindungsgemäßen Verfahrens.

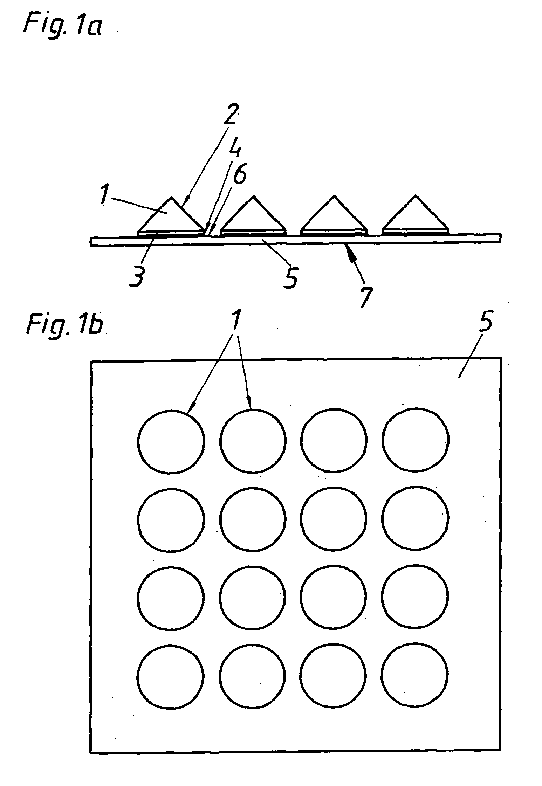

Fig. 1a zeigt eine Seitenansicht einer Trägerfolie 5 zur Anwendung in einem erfindungsgemäßen Verfahren für die Herstellung eines mit Schmucksteinen 1 versehenen Spritzgießartikels 8. Auf einer ersten Seite 6 der Trägerfolie 5 ist eine Vielzahl von Schmucksteinen 1 angeordnet, indem die Schmucksteine 1 mit ihrer plan ausgebildeten Sichtfläche 3 über eine Klebstoffschicht 4 auf die Trägerfolie 5 geklebt sind. In der Draufsicht der Fig. 1b ist zu sehen, dass die Schmucksteine 1 in regelmäßigen Reihen und Spalten auf der Trägerfolie 5 angeordnet sind. Dabei ragen die Setzflächen 2 der Schmucksteine 1 von der Trägerfolie 5 weg. Die Trägerfolie 5 wird nun derart in eine Spritzgussform eingelegt, dass eine zweite Seite 7 der Trägerfolie 5 zur Innenwandung der Spritzgussform weist, während die erste Seite 6 der Trägerfolie 5 und die Setzfläche 2 der Schmucksteine 1 mit flüssiger Kunststoffschmelze hinterspritzt wird.

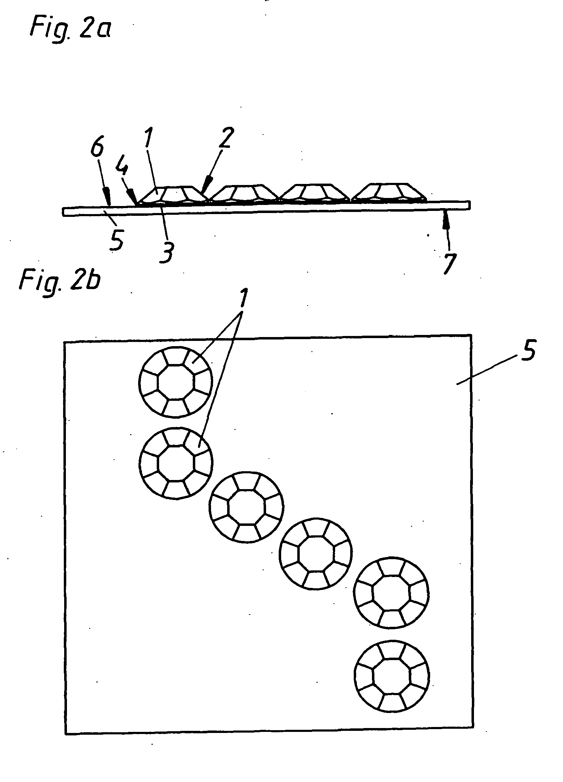

Fig. 2a zeigt eine Seitenansicht einer Trägerfolie 5 zur Anwendung in einem erfindungsgemäßen Verfahren zur Herstellung eines mit Schmucksteinen 1 versehenen Spritzgießartikels 8. Im Unterschied zur Fig. 1a sind die Schmucksteine 1 in diesem Ausführungsbeispiel facettiert geschliffen und weisen flache Setzflächen 2 auf. Derartige Schmucksteine 1 sind im Handel als Rosen "geläufig". Die Schmucksteine 1 sind mit ihrer ebenfalls flachen Sichtfläche 3 auf eine erste Seite 6 der Trägerfolie 5 mittels einer Klebstoffschicht 4 geklebt. Die Setzfläche 2 der Schmucksteine 1 zeigt nach oben.

Wie anhand der Fig. 2b zu sehen ist, sind die Schmucksteine 1 in einem Muster auf der Trägerfolie 5 angeordnet.

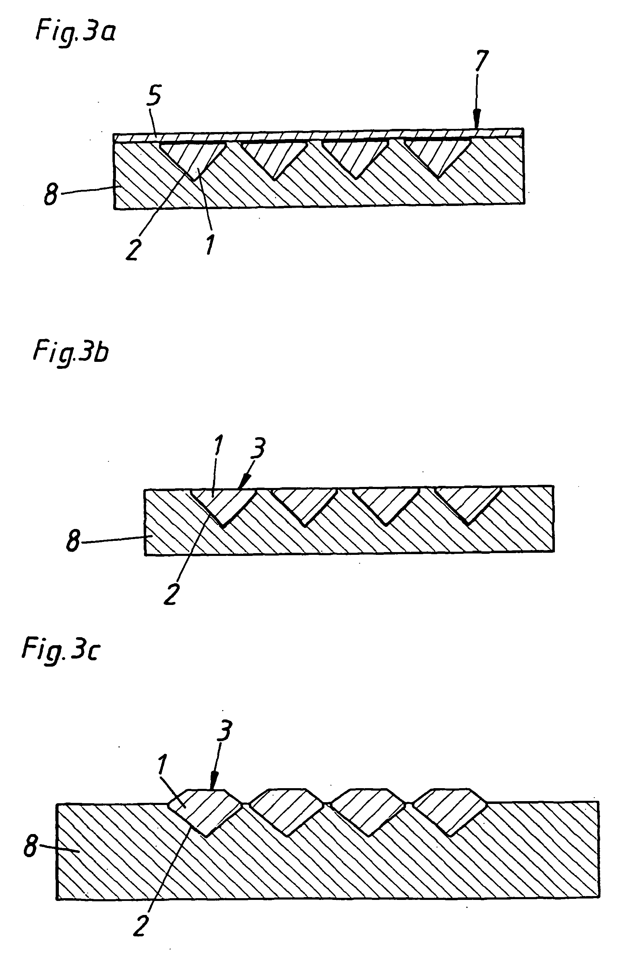

Fig. 3a zeigt einen Querschnitt durch einen erfindungsgemäßen Spritzgießartikel 8 in dem eine Vielzahl von Schmucksteinen 1 mit ihrer Sichtfläche 3 in Richtung des Inneren des Spritzgießartikels 8 angeordnet sind. Die Trägerfolie 5 ist über den Schmucksteinen 1 angeordnet, sodass die zweite Seite 7 der Trägerfolie 5 in Blickrichtung eines Betrachters angeordnet ist. Die Trägerfolie 5 verbleibt auf dem Spritzgießartikel 8, z. B. als Schutzschicht oder weil die Trägerfolie 5 selbst optisch ansprechend ausgebildet ist, sodass die Trägerfolie 5 somit als Teil des dekorativen Spritzgießartikels 8 anzusehen ist.

Fig. 3b zeigt einen Querschnitt einer weiteren Ausführungsform eines erfindungsgemäßen Spritzgießartikels 8, bei dem die Trägerfolie 5 nach der Herstellung, d.h. nach dem Spritzgießprozess, wieder entfernt worden ist. Die Sichtflächen 3 der Schmucksteine 1, die in einer Vielzahl im Spritzgießartikel 8 angeordnet und durch Hinterspitzen mit Kunststoffschmelze in der Spritzgießmaschine mit diesem verbunden worden sind, weisen in Blickrichtung eines Betrachters, sodass der Spritzgießartikel 8 äußerst dekorativ erscheinen kann.

Eine weitere Ausführungsform eines Spritzgießartikels 8 ist in einem Querschnitt in Fig. 3c dargestellt. In diesem Ausführungsbeispiel ragen die Sichtflächen 3 der Schmucksteine 1, die mit ihrer Setzfläche 2 im Inneren des Spritzgießartikels 8 angeordnet sind, reliefartig von der Oberfläche des Spritzgießartikels 8 hervor. Dadurch ist neben dem rein optischen Eindruck auch der haptische Eindruck des Spritzgießartikels 8 äußerst ansprechend. Im Gegensatz zu herkömmlichen Kunststoffartikeln mit aufgeklebten Schmucksteinen ist allerdings die Verbindung der Schmucksteine 1 mit dem Spritzgießartikel 8 gemäß der Erfindung äußerst stabil und haltbar. In all diesen Ausführungsbeispielen kann vorgesehen sein, dass die Setzflächen 2 der Schmucksteine 1 mit einer Reflexionsschicht oder Verspiegelungsschicht ausgebildet sind.

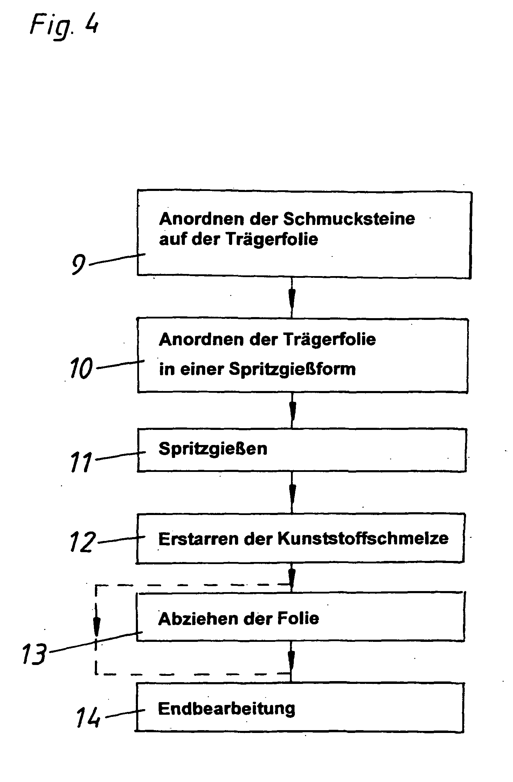

Fig. 4 zeigt ein Flussdiagramm in dem die wesentlichen Verfahrensschritte eines Ausführungsbeispiels des erfindungsgemäßen Verfahrens gemäß ihrer Reihenfolge angeführt sind.

In einem ersten Schritt 9 wird eine Vielzahl von Schmucksteinen 1 auf einer Trägerfolie 5 angeordnet, indem die Schmucksteine 1 in einem Muster mit einer Klebstoffschicht 4 auf eine erste Seite 6 der Trägerfolie 5 geklebt werden. Dazu kann es vorgesehen sein, dass die Schmucksteine 1 vorher aufgesiebt worden sind. Damit die Verbindung der Schmucksteine 1 mit der Trägerfolie haltbar genug ist, kann je nach verwendetem Klebstoff eine Aushärtung des Klebstoffs mit UV-Strahlung oder Temperatureinwirkung vorgesehen sein.

Nachdem der Klebstoff ausgehärtet ist, wird in einem nächsten Schritt 10 die Trägerfolie 5 mit den darauf angeordneten Schmucksteinen 1 in eine Spritzgießform eingelegt. Dabei kann die zweite Seite 7 der Trägerfolie 5, an der keine Schmucksteine 1 angeordnet sind, an die Innenwandung der Spritzgießform anliegen.

Der nächste Schritt 11 ist der eigentliche Spritzgießprozess, bei dem Kunststoffschmelze in die Spritzgießform, d.h. in die Kavität des Spritzgießwerkzeugs, eingespritzt wird, wozu beispielsweise eine Plastifizierschnecke verwendet wird. Die eingedrückte Kunststoffschmelze drückt die zweite Seite 7 der Trägerfolie 5 an die Innenwandung der Spritzgießform. Die gegenüberliegende erste Seite 6 der Trägerfolie 5 mit den darauf angeordneten Schmucksteinen 1 wird mit Kunststoffschmelze hinterspritzt.

Durch das Erstarren in einem weiteren Schritt 12 werden die Setzflächen 2 der Schmucksteine 1 mit der erstarrenden Kunststoffschmelze gut und stabil verbunden. Gegebenenfalls kann auch die Trägerfolie 5 mit der Kunststoffschmelze verbunden sein.

In einem optionalen weiteren Schritt 13 wird die Trägerfolie 5 vom Spritzgießartikel 8 abgezogen. Ist gewünscht, dass die Trägerfolie 5 zum Beispiel als Schutzschicht auf dem Spritzgießartikel verbleibt, kann dieser Schritt 13 auch ausgelassen werden.

In einem weiteren optionalen Schritt 14 kann nun vorgesehen sein, den Spritzgießartikel 8 einer Endbearbeitung zuzuführen und den Spritzgießartikel 8 zum Beispiel zu lackieren und/oder zu schleifen und/oder zu polieren.

Ein derart hergestellter erfindungsgemäßer Spritzgießartikel 8 ist äußerst vielfältig einsetzbar, zum Beispiel als Gehäuse von Mobiltelefonen, Medienabspielgeräten oder anderen elektrischen Geräten. Natürlich kann ein derartiger Spritzgießartikel 8 auch für allgemeine Verpackungen oder für Mitgliedskarten, insbesondere exklusiver Vereine, oder für Spieljetons, insbesondere falls diese hohen Setzbeträgen entsprechen, eingesetzt werden. Diese Aufzählung der Einsatzmöglichkeiten ist natürlich keine abschließende Aufzählung.

Dabei kann die Erfindung sowohl nur eine Art von Schmuckstein hinsichtlich Form und/oder Material als auch eine Mehrzahl verschiedenartiger Schmucksteine aufweisen, also homogen oder heterogen aufgebaut sein. Auch müssen nicht alle Schmucksteine gleich im Spritzgussartikel bzw. auf der Trägerfolie angeordnet sein, obgleich dies bevorzugt ist.

## Patentansprüche

1. Verfahren zur Herstellung eines mit mindestens einem Schmuckstein (1) versehenen Artikels, wobei der mindestens eine Schmuckstein (1) in oder an einer Haltevorrichtung angeordnet wird und unter Verwendung einer Spritzgießmaschine mit Kunststoffschmelze hinterspritzt wird, **dadurch gekennzeichnet, dass** die Haltevorrichtung eine Trägerfolie (5) aufweist, an bzw. von der der mindestens eine Schmuckstein (1) während des Spritzgießens gehalten wird.

2. Verfahren nach Anspruch 1, **dadurch gekennzeichnet, dass** eine Vielzahl von Schmucksteinen (1) in oder an einer Haltevorrichtung angeordnet wird und unter Verwendung einer Spritzgießmaschine mit Kunststoffschmeize hinterspritzt wird.

3. Verfahren nach Anspruch 1 oder 2, **dadurch gekennzeichnet, dass** der mindestens eine Schmuckstein (1) auf die Trägerfolie (5) geklebt wird.

4. Verfahren nach einem der Ansprüche 1 bis 3, **dadurch gekennzeichnet, dass** der mindestens eine Schmuckstein (1) eine Sichtfläche (3) und eine Setzfläche (2) aufweist und derart in oder an der Haltevorrichtung angeordnet wird, dass die Sichtfläche (3) an der Außenseite der Kunststoffschmelze angeordnet ist.

5. Verfahren nach einem der Ansprüche 1 bis 4, **dadurch gekennzeichnet, dass** die Trägerfolie (5) zur Anordnung des mindestens einen Schmuckstein (1) tiefgezogen wird.

6. Verfahren nach einem der Ansprüche 1 bis 5, **dadurch gekennzeichnet, dass** die Haltevorrichtung vom Artikel entfernt wird.

7. Verfahren nach einem der Ansprüche 1 bis 5, **dadurch gekennzeichnet, dass** die Haltevorrichtung im bzw. am Artikel verbleibt.

8. Verfahren nach einem der Ansprüche 1 bis 7, **dadurch gekennzeichnet, dass** der Artikel lackiert und/oder geschliffen und/oder poliert wird.

9. Verfahren nach einem der Ansprüche 1 bis 8, **dadurch gekennzeichnet, dass** der mindestens eine Schmuckstein (1), vorzugsweise facettiert, geschliffen ist.

10. Verfahren nach einem der Ansprüche 1 bis 9, **dadurch gekennzeichnet, dass** der mindestens eine Schmuckstein (1) aus Glas oder Kunststoff besteht und/oder die Setzfläche (2) des mindestens einen Schmuckstein (1) verspiegelt ausgebildet ist.

11. Verfahren nach einem der Ansprüche 2 bis 10, **dadurch gekennzeichnet, dass** eine Velzahl von Schmucksteinen (1) in oder an der Trägerfolie (5) angeordnet ist, wobei die Schmucksteine (1) in Reihen und Spalten oder in einem Muster in oder an der Trägerfolie (5) angeordnet sind.

12. Verfahren nach einem der Ansprüche 1 bis 11, **dadurch gekennzeichnet, dass** die Trägerfolie (5) Polycarbonate und/oder Polymethylmethacrylate und/oder Polyethylenterephthalat umfasst.

13. Verfahren nach einem der Ansprüche 1 bis 12, **dadurch gekennzeichnet, dass** die Trägerfolie (5) in einem Druckbereich zwischen 300 bar und 1500 bar, vorzugsweise zwischen 500 bar und 1200 bar, druckstabil und/oder in einem Temperaturbereich zwischen 80° C und 350° C, vorzugsweise zwischen 100° C und 300° C, temperaturstabil ist.

14. Spritzgießartikel mit mindestens einem, vorzugsweise mit einer Vielzahl, von mit Kunststoffschmelze hinterspritzten Schmuckstein(en) (1), hergestellt mit einem Verfahren nach einem der Ansprüche 1 bis 13, **dadurch gekennzeichnet, dass** der mindestens eine Schmuckstein (1) reliefartig von der Oberfläche des Spritzgießartikels (8) hervorsteht.

15. Spritzgießartikel mit mindestens einem, vorzugsweise mit einer Vielzahl, von mit Kunststoffschmelze hinterspritzten Schmuckstein(en) (1), hergestellt mit einem Verfahren nach einem der Ansprüche 1 bis 13, **dadurch gekennzeichnet, dass** die mit dem mindestens einen Schmuckstein (1) versehene Oberfläche des Spritzgießartikels plan ausgebildet ist.

## Claims

1. A process for producing an article provided with at least one gem (1), wherein the at least one gem (1) is arranged in or on a holding device and has molten plastic material injected therebehind using an injection moulding machine, **characterised in that** the holding device has a carrier film (5) to or by which the at least one gem (1) is held during the injection moulding operation.

2. A process according to claim 1 **characterised in that** a plurality of gems (1) is arranged in or on a holding device and has molten plastic material injected therebehind using an injection moulding machine.

3. A process according to claim 1 or claim 2 **characterised in that** the at least one gem (1) is glued on to the carrier film (5).

4. A process according to one of claims 1 to 3 **characterised in that** the at least one gem (1) has a visible surface (3) and a setting surface (2) and is arranged in or on the holding device in such a way that the visible surface (3) is arranged at the outside of the molten plastic material.

5. A process according to one of claims 1 to 4 **characterised in that** the carrier film (5) is deep-drawn for the arrangement of the at least one gem (1).

6. A process according to one of claims 1 to 5 **characterised in that** the holding device is removed from the article.

7. A process according to one of claims 1 to 5 **characterised in that** the holding device remains in or on the article.

8. A process according to one of claims 1 to 7 **characterised in that** the article is lacquered and/or ground and/or polished.

9. A process according to one of claims 1 to 8 **characterised in that** the at least one gem (1) is ground, preferably faceted.

10. A process according to one of claims 1 to 9 **characterised in that** the at least one gem (1) comprises glass or plastic material and/or the setting surface (2) of the at least one gem (1) is of a mirrored nature.

11. A process according to one of claims 2 to 10 **characterised in that** a plurality of gems (1) is arranged in or on the carrier film (5), the gems (1) being arranged in rows and columns or in a pattern in or on the carrier film (5).

12. A process according to one of claims 1 to 11 **characterised in that** the carrier film (5) includes polycarbonates and/or polymethyl methacrylates and/or polyethylene terephthalate.

13. A process according to one of claims 1 to 12 **characterised in that** the carrier film (5) is pressure-stable in a pressure range of between 300 bars and 1500 bars, preferably between 500 bars and 1200 bars, and/or is temperature-stable in a temperature range of between 80°C and 350°C, preferably between 100°C and 300°C.

14. An injection moulded article having at least one and preferably a plurality of gems (1) with molten plastic material injected therebehind, produced with a process according to one of claims 1 to 13, **characterised in that** the at least one gem (1) projects relief-like from the surface of the injection moulded article (8).

15. An injection moulded article having at least one and preferably a plurality of gems (1) with molten plastic material injected therebehind, produced with a process according to one of claims 1 to 13, **characterised in that** the surface of the injection moulded article, that is provided with the at least one gem (1), is flat.

## Revendications

1. Procédé de fabrication d'un article pourvu d'au moins une pierre ornementale (1), la ou les pierres ornementales (1) étant disposées dans ou contre un dispositif de maintien et une matière plastique en fusion étant injectée à l'arrière de celles-ci à l'aide d'une machine à mouler par injection, **caractérisé en ce que** le dispositif de maintien comporte une feuille de support (5), sur laquelle ou par laquelle la ou les pierres ornementales (1) sont retenues pendant le moulage par injection

2. Procédé selon la revendication 1, **caractérisé en ce qu'**une pluralité de pierres ornementales (1) est disposée dans ou contre un dispositif de maintien et **en ce qu'**une matière plastique en fusion est injectée à l'arrière de celles-ci à l'aide d'une machine à mouler par injection.

3. Procédé selon la revendication 1 ou la revendication 2, **caractérisé en ce que** la ou les pierres ornementales (1) sont collées sur la feuille de support (5).

4. Procédé selon l'une des revendications 1 à 3, **caractérisé en ce que** la ou les pierres ornementales (1) comportent une surface apparente (3) et une surface de siège (2) et sont disposées dans ou contre le dispositif de maintien de telle manière que la surface apparente (3) est disposée sur le côté extérieur de la matière plastique en fusion.

5. Procédé selon l'une des revendications 1 à 4, **caractérisé en ce que** la feuille de support (5) est emboutie pour l'agencement de la ou des pierres ornementales (1).

6. Procédé selon l'une des revendications 1 à 5, **caractérisé en ce que** le dispositif de maintien est retiré de l'article.

7. Procédé selon l'une des revendications 1 à 5, **caractérisé en ce que** le dispositif de maintien reste dans ou contre l'article.

8. Procédé selon l'une des revendications 1 à 7, **caractérisé en ce que** l'article est verni et/ou meulé et/ou poli.

9. Procédé selon l'une des revendications 1 à 8, **caractérisé en ce que** la ou les pierres ornementales (1), sont meulées, de préférence facettées.

10. Procédé selon l'une des revendications 1 à 9, **caractérisé en ce que** la ou les pierres ornementales (1) sont en verre ou en matière synthétique, et/ou **en ce que** la surface de positionnement (2) de la ou des pierres ornementales (1) est métallisée.

11. Procédé selon l'une des revendications 2 à 10, **caractérisé en ce qu'**une pluralité de pierres ornementales (1) sont disposées dans ou sur la feuille de support (5), les pierres ornementales (1) étant disposées en rangées et colonnes ou suivant un motif dans ou sur la feuille de support (5).

12. Procédé selon l'une des revendications 1 à 11, **caractérisé en ce que** la feuille de support (5) comprend des polycarbonates et/ou des polyméthacrylates de polyméthyle et/ou du téréphtalate de polyéthylène.

13. Procédé selon l'une des revendications 1 à 12, **caractérisé en ce que** la feuille de support (5) est stable à la pression dans une plage de pression entre 300 bars et 1500 bars, préférentiellement entre 500 bars et 1200 bars, et/ou stable à la température dans une plage de température entre 80° C et 350° C, préférentiellement entre 100° C et 300° C.

14. Article moulé par injection pourvu d'au moins une, de préférence d'une pluralité de pierres ornementales (1), une matière plastique en fusion étant injectée à l'arrière de celles-ci, fabriquées suivant un procédé selon l'une des revendications 1 à 13, **caractérisé en ce que** la ou les pierres ornementales (1) font saillie en relief à la surface de l'article moulé par injection (8).

15. Article moulé par injection pourvu d'au moins une, de préférence d'une pluralité de pierres ornementales (1), une matière plastique en fusion étant injectée à l'arrière de celles-ci, fabriquées suivant un procédé selon l'une des revendications 1 à 13, **caractérisé en ce que** la surface de l'article moulé par injection pourvue de la ou des pierres ornementales (1) est plane.
